# EUROPEAN PATENT APPLICATION

(11) **EP 4 694 142 A1**
(43) Date of publication of application: **11.02.2026**
(21) Application number: 24306348.4
(22) Date of filing: 09.08.2024
(51) Int. Cl.: H04N 21/2343, H04N 21/845

(54) **BITRATE SWITCHING AT PICTURE LEVEL FOR VIDEO DISTRIBUTION**

(71) Applicant: MK Systems USA Inc., Wilmington, DE 19808 (US)
(72) Inventor: NIEBUR, Mark, Wilmington, 19808 (US); ROPERT, Michael, Wilmington, 19808 (US); MULLER, Matthieu, Wilmington, 19808 (US); BAUMANN, Olie, Wilmington, 19808 (US); FLIAM, Richard, Wilmington, 19808 (US)
(74) Representative: Haseltine Lake Kempner LLP

(57) **Abstract**

Systems and methods for bitrate switching are described herein to improve the video distribution for users having different available bandwidth. Embodiments described herein improve the bitrate switching granularity and bitrate adaptation capabilities of a video delivery system.

## Description

### FIELD

The improvements generally relate to the field of video distribution.

### INTRODUCTION

Embodiments described herein relate to bitrate switching for video distribution. Embodiments described herein relate to methods and systems for bitrate switching to make the video distribution reliable for users having different available bandwidth. These bandwidths may be variable and different across users and their respective players, for example.

### SUMMARY

Embodiments described herein relate to systems and methods for bitrate switching at a fragment level or picture level for video distribution.

In accordance with an aspect, there is provided a system for improved bitrate switching. The system has a plurality of encoders jointly configured with the same GOP structure, the same resolution. The encoders generate N streams in ascending order relative to the bitrate; a rate selector that receives a request for a segment from a player and selects a bitrate for the segment; and a rate analyzer that sends bitrate data about the player to the rate selector to select the bitrate for the segment. The rate selector receives the segment from an edge server and sends the segment in a selected bitrate to the player. In some embodiments, encoders generate N streams of the same segment at different bitrates. In some embodiments, encoders generate N streams of chunks or fragments of the same segment at different bitrates.

In accordance with an aspect, there is provided a system for bitrate switching. The system has a plurality of encoders jointly configured with the same GOP structure and the same resolution, wherein the plurality of encoders generate N streams in ascending order relative to the bitrate. The system has a rate selector that receives a request for a segment from a player and selects a bitrate for the segment or a fragment of the segment. The system has a rate analyzer that sends bitrate data about the player to the rate selector to select the bitrate for the segment or the fragment of the segment. The rate selector receives the segment the fragment of the segment from an edge server and sends the segment in a selected bitrate to the player. The rate selector can switch between different fragments or chunks of the same segment to generate a reconstructed segment. The different fragments or chunks of the same segment can be at different bitrates.

In some embodiments, the encoders generate N streams of the segment at different bitrates. In some embodiments, the encoders generate N streams of chunks or fragments of the segment at different bitrates.

In some embodiments, the rate selector selects different fragments to reconstruct the segment. In some embodiments, the rate selector selects different fragments (of the same segment) in different bitrates to reconstruct the segment.

In some embodiments, the encoders stream the same segments to the edge server at different bitrates.

In some embodiments, the rate selector switches between different segments and bitrates to select fragments to make up the requested segment for the player.

In some embodiments, the encoders/packagers generate streams corresponding to bitrate ladders.

In some embodiments, the rate selector sends the segment in CMAF-LLC format in the selected bitrate to the player.

In some embodiments, the rate analyzer is implemented either at the edge side or at the player side.

In some embodiments, bitrate selection is implemented by the rate selector at the edge server.

In some embodiments, the edge server receives the segment in CMAF-LLC format for all bitrates.

In some embodiments, bitrate selection is implemented by the rate selector at the origin server location.

In some embodiments, all streams corresponding to all the possible bitrates are conveyed until the edge server.

In some embodiments, for the CMAF-LLC format, each sub-GOP wrapped in a fragment is separated with a MOOF delimiter.

In some embodiments, after initializing the bitrate, the segments corresponding to a maximal acceptable bitrate are pushed to the player, and the maximal acceptable bitrate is obtained from data computed by the rate observer.

In some embodiments, the rate analyzer is implemented either at the edge side or at the player side.

In some embodiments, the rate selection is implemented at the edge server, wherein all streams corresponding to all the possible bitrates are conveyed to the edge server.

In accordance with another aspect, there is provided a method for bitrate switching at the sub-GOP/picture level. The method involves jointly configuring a plurality of encoders with the same GOP structure, the same resolution and generate N streams in ascending order relative to the bitrate, and switching between streams at the GOP level without any additional distortion compared to the original streams.

In some embodiments, the method involves switching at the sub-GOP/picture level at the cost of an additional distortion drift on the current stream, wherein the rate control is then facilitated and rate changes are allowed more often.

In accordance with another aspect, there is provided a method for bitrate switching at the sub-GOP/picture level. The method involves: jointly configuring a plurality of encoders with the same GOP structure, the same resolution; generating, by the plurality of encoders, N streams in ascending order relative to the bitrate; receiving a request for a segment from a player; sending bitrate data about the player; selecting a bitrate for the segment using the bitrate data; and receiving the segment from an edge server and sending the segment in a selected bitrate to the player.

In accordance with another aspect, there is provided a system for bitrate switching at the sub-GOP/picture level. The system involves a plurality of encoders jointly configured with the same GOP structure and the same resolution, wherein the plurality of encoders generate N streams in ascending order relative to the bitrate. A rate selector receives a request for a segment from a player and selects a bitrate for the segment. A rate analyzer sends bitrate data about the player to the rate selector to select the bitrate for the segment. The rate selector can receive chunk or fragments of the segment from an edge server and sends the chunk or fragments of the segment in a selected bitrate to the player.

Many further features and combinations thereof concerning embodiments described herein will appear to those skilled in the art following a reading of the instant disclosure.

### DESCRIPTION OF THE FIGURES

In the figures,
Fig. 1 is a view of an example of schematic diagram of CMAF structure;
Fig. 2 is a view of an example of schematic diagram of repurposing partial segments;
Fig. 3 is a view of an example of schematic diagram of CMAF-LLC structure;
Fig. 4 is a view of an example of schematic diagram of combining MDAT fragments;
Fig. 5 is a view of an example of schematic diagram of CMAF streaming;
Fig. 6 is an example schematic diagram of a modified distribution process between the edge server and the player;
Fig. 7 is a schematic diagram of an example of low delay distribution chain in push mode;

### DETAILED DESCRIPTION

Embodiments described herein relate to systems and methods for bitrate switching to improve video distribution for users having different available bandwidth. These bandwidths may be variable and different per user (e.g. the associated player or device).

Group of pictures (GOP) may be a set of sequential pictures that can be denoted using the distance between two reference frames and the distance between two intra pictures. In video coding, a GOP structure specifies the order in which intra- and inter-frames are arranged. A GOP is a collection of successive pictures within a coded video stream. GOP can be measured in the number of frames, or the amount of time between keyframes. For example, if a keyframe is inserted every 1 second into a video at 30 frames per second, the GOP length is 30 frames, or 1 second. Compared to a usual low delay delivery where the bitrate switching only occurs at the GOP level, embodiments described herein may implement bitrate switching at the sub-GOP, fragment or picture level. That is, embodiments described herein may implement bitrate switching at a more granular level than the GOP level. Accordingly, the switching granularity is better. This description will refer to a sub-GOP level in some instances, but it may also refer to a segment level, fragment level, or picture level, and effectively, they may all refer to a GOP level. Embodiments described herein may relate to several encoders that are jointly configured, with the same GOP structure, the same resolution to generate streams in ascending order relative to the bitrate. The bitrate switching at the sub-GOP, fragment or picture level is enabled by this encoding. The encoder(s) are jointly configured to encode different segments similarly (e.g. at the sub-GOP, fragment or picture level) for bitrate switching between the encoded segments at the sub-GOP, fragment or picture level. Generally, encoding is different across segments so that switching between segments cannot occur until play out of a segment is complete.

In some embodiments, the joint configuration of the encoders can be implemented by setting the encoders to have the same resolution, motion estimation process, and macroblock partitioning method. In particular, the encoders can share a sequence parameter set, a picture parameter set, and frame type ordering.

Embodiments described herein improve the bitrate switching granularity using the jointly configured encoders. For example, the bitrate switching for video segments can be implemented at the fragment level, sub-GOP (e.g., chunks) level or picture level. This description may refer to segment level, fragment level, sub-GOP level, picture level and chunks level. A segment refers to at least one GOP. A fragment refers to one complete GOP. A chunk refers to a sub-GOP level. A picture refers to one frame. Embodiments described herein can increase the bitrate adaptation capabilities of a video delivery system. As a consequence of the improved bitrate switching granularity, embodiments described herein can reduce the probability of network congestion, and can improve the video quality with a better use of the available bandwidth. This may be particularly pertinent for low delay delivery.

Video distribution over Hypertext Transfer Protocol (HTTP) uses Content Delivery Networks (CDNs) to convey the video all the way to users (e.g. the associated player or device).

A stream is played at the request of the player. Possible rates can be listed in a manifest The bitrate selection is ordered or requested by the player which knows its own available bandwidth. Embodiments described herein relate to a bitrate switching technique to make the video distribution reliable for users having associated players or devices with different available bandwidths. These bandwidths may be variable and different per user player or device, for example.

If the CDN already has the piece or segment of video corresponding to the requested rate available in its cache, then the piece or segment of video is copied and the copy is delivered to the player. If not, the request goes upstream to the origin server, which then delivers the piece or segment video.

Video can be encoded differentially from images to images. The rate switching generally occurs only on intra-coded keyframes, meaning that the frames themselves by finding and eliminating redundancies within the same image (i.e., spatial compression), and thus all of the information required to decode this type of frame comes from within itself ("intra"). The decoder does not depend on or require any other frames in order to create the image.

The rate switching occurs only on intra-coded frames (in decoding order). This means that the rate switching only occurs at the GOP level (or segment level) in video, corresponding to the segment-level for packaged streams (e.g., HTTP Smooth Streaming (HSS), HTTP Dynamic Streaming (HDS), Dynamic Adaptive Streaming over HTTP (DASH), and so on). These streaming standards only allow the switch at the segment level in streams. HTTP Live Streaming (HLS) allows for rate switching at the fragment level (configured with #EXT-X-PART:INDEPENDENT=YES), but none of the streaming standards allow for mid-GOP level or sub-fragment level switching without a chunk starting with an intra-coded frame.

Consequently, the reactivity of the bitrate adaptation only occurs at the GOP size granularity.

On the one hand, when the bandwidth is insufficient, the probability of network congestion increases, which can cause the player to freeze. On the other hand, when the bandwidth decreases, the video quality remains the same.

Low latency delivery suffers from a lack of granularity of bitrate changes. For low latency transmission, the better the granularity, the more reliable the transmission, and the higher the video quality. With the current standards (e.g., Common Media Application Format in DASH or HLS (CMAF), HLS, and so on), even in their low latency version (e.g., Low-Latency CMAF (CMAF-LL), Low-Latency HLS (LL-HLS), and so on), the bitrate switching is only supported at the GOP (segment) level, making the distribution system sub-optimal and poorly reliable.

The switching granularity could be improved using "switching pictures" (SP). However, this function has disappeared from recent codecs (e.g., High Efficiency Video Coding (HEVC), Versatile Video Coding (WC), Advanced Video Coding (AVC), and so on) as an increase in switching granularity using SP would result in a poor compression efficiency, leading to bandwidth wasting, which is the opposite of the desired effect.

Embodiments described herein provide systems and methods to improve bitrate switching granularity. Embodiments described herein may relate to several encoders that are jointly configured with the same GOP structure and the same resolution to generate streams (e.g. of video segments) in ascending order relative to the bitrate. Embodiments described herein improve the bitrate switching granularity using the jointly configured encoders. For example, the bitrate switching for video segments can be implemented at the fragment (e.g. chunks) level, sub-GOP level or picture level.

Embodiments described herein provide a system of several encoders that are jointly configured to similarly encode segments e.g. with the same GOP structure and resolution, and generate N streams (e.g. of the encoded segments) in ascending order relative to the bitrate. Embodiments described herein provide systems and methods for video distribution such that switching between streams can occur at the GOP level without any additional distortion compared to the original streams. Embodiments described herein provide systems and methods for video distribution such that switching can occur at the sub-GOP/picture level at the cost of an additional distortion drift on the current stream (e.g., the stream that is played after the switch). Loss in picture quality can occur when switching the player to a lower bitrate stream in the middle of a GOP as opposed to keeping the player on the original higher bitrate stream.

The switching granularity occurs at the sub-GOP/picture level compared to the traditional GOP level. The rate control is then facilitated, allowing rate changes more often.

The methods and systems for improved bitrate switching granularity do not require changes in the standardization (it requires additional modules).

In some embodiments, switching is done to reduce the bitrate, and although the distortion drift is not mastered, the switching still allows for a slightly degraded video rather than a player freeze.

In some embodiments, switching is done to increase the bitrate, and although the distortion drift is not mastered, the video quality will globally improve until the next GOP, where all drifts will have completely disappeared.

Embodiments described herein do not include bitrate ladders. Typically, bitrate ladders (described in manifests) support different resolutions between streams. The resolution changes may become less and less necessary in bitrate ladders. Embodiments described herein do not affect bitrate or resolution profiles in adaptive bitrate streaming other than the additional profiles that are created to accommodate additional profiles with the same resolution and lower bitrate.

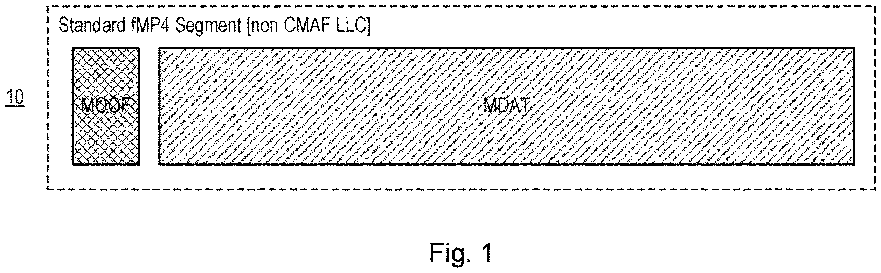

Fig. 1 shows a view of an example schematic diagram of the standard CMAF structure of DASH. Fig. 1 shows an example of an fMP4 segment 10. In Fig. 1, the "MovieFragmentBox" delimiter in DASH ("MOOF") precedes the "MediaDataBox" in DASH ("MDAT") (wrapping a closed GOP). The MDAT portion contains the actual media data (e.g. media frames). The MOOF portion contains metadata about the media data in the corresponding MDAT portion.

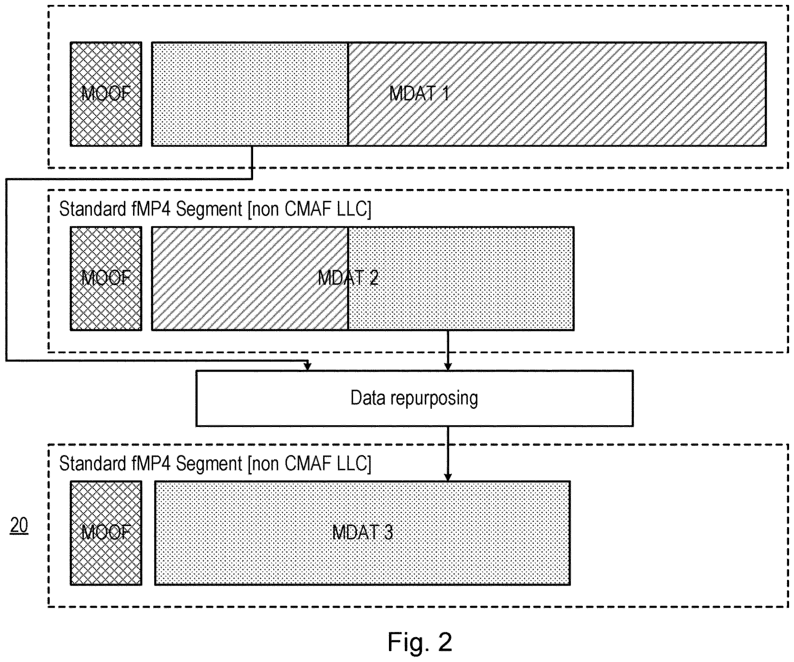

Fig. 2 is a view of an example schematic diagram of repurposing partial segments. Fig. 2 shows an example of an fMP4 segment 20. Fig. 2 shows that the reconstruction of a valid MDAT concatenating two pieces of MDAT (MDAT1 and MDAT2) would require complex manipulations to regenerate a valid CMAF segment (MDAT3). This option is not valid for different reasons. For example, the amount of processing is high and the repurposing requires de-packetizing and repacketizing of the data, and the second segment must be completely received to achieve the repurposing.

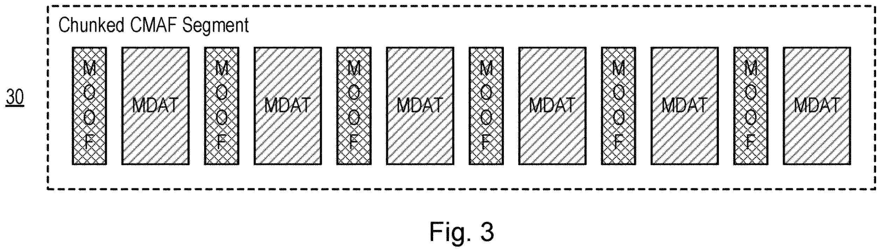

Fig. 3 is a view of an example schematic diagram of a CMAF Low Latency Chunk (CMAF-LLC) structure. Fig. 3 shows an example chunked CMAF segment 30. In the CMAF-LLC structure in Fig. 3, each sub-GOP wrapped in a fragment is separated with a MOOF delimiter. The chunked CMAF segment 30 has a sequence of chunks, each chunk with a MOOF portion and corresponding MDAT portion.

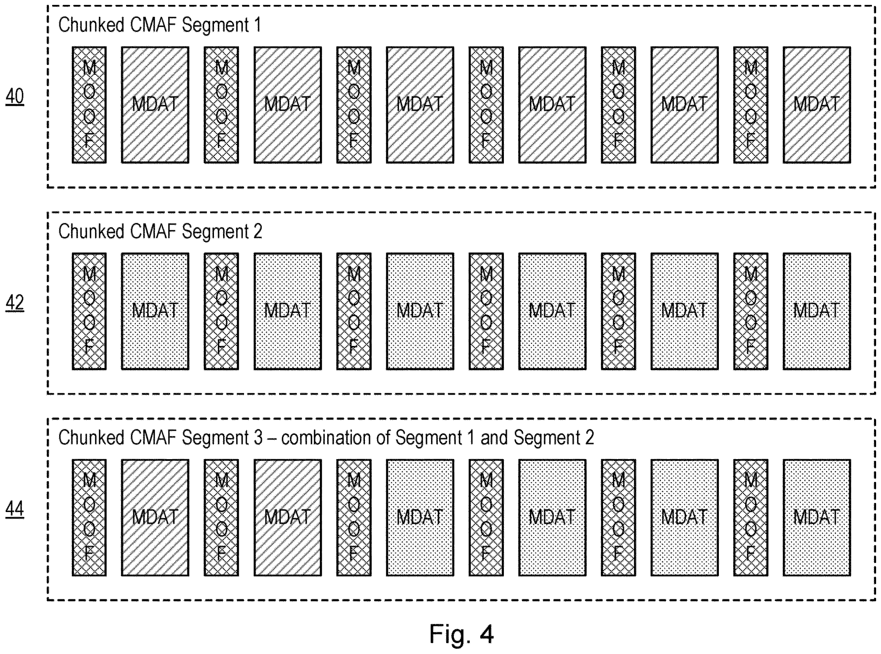

Fig. 4 is a view of an example schematic diagram of combining MDAT fragments. Fig. 4 shows an example chunked CMAF segment 44 that is a combination of a first chunked segment 40 and a second chunked segment 42. Fig. 4 shows that the reconstruction and recomposition of a valid MDAT sequence can be done at the edge server by selecting and combining MDAT fragments or chunks from different segments 40, 42. Segments are composed of chunks or fragments. The new reconstructed segment 44 is a new sequence of chunks or fragments. That is, the reconstructed segment 44 is generated from a combination of fragments or chunks from different segments 40, 42. Each segment 40, 42, 44 is made up of a sequence of fragments or chunks, each fragment or chunk having a MOOF portion and corresponding MDAT portion.

The reconstructed segment 44 can be generated by a system for bitrate switching. The system has a plurality of encoders jointly configured with the same GOP structure and the same resolution. The encoders generate N streams of different bitrates in ascending order relative to the bitrate. In some embodiments, the encoders generate N streams of a segment with different bitrates in ascending order relative to the bitrate. In some embodiments, the encoders generate N streams of fragments or chunks so that they can be combined with other fragments or chunks generated by the jointly configured encoders. A rate selector can receive a request for a segment from a player and selects a bitrate for the segment or fragment or chunk. In some embodiments, a rate analyzer sends bitrate data about the player to the rate selector to select the bitrate for the segment. In some embodiments, a rate analyzer sends bitrate data about the player to the rate selector to select the bitrate for fragments or chunks of the segment. In some embodiments, the rate selector receives fragments or chunks of the segment from an edge server. In some embodiments, the rate selector receives the segment from an edge server. The rate selector sends the segment in a selected bitrate to the player. The rate selector can switch in fragments or chunks of different segments at the edge server or client side. The rate selector can switch in fragments or chunks of different segments to generate the reconstructed segment 44.

In Fig. 4, the first segment 40 and second segment 42 are available at the edge server and fragments of each segment 40, 42 can be switched in by a rate selector at the edge server or client side. In some embodiments, the rate selector can be implemented to be at the edge server. In other embodiments, the rate selector can be implemented to be on the client side. In some embodiments, the rate selector can receive a request for a segment from a player and selects a bitrate for the segment. In some embodiments, the rate selector can receive a request for a segment from a player and selects a bitrate for chunks or fragments of the segment. A rate analyzer sends bitrate data about the player to the rate selector to select the bitrate for fragments of the segment. The rate selector receives the fragments segment from an edge server and sends the segment in a selected bitrate to the player. The rate selector can switch in fragments of each segment 40, 42 at the edge server or client side.

The encoder encodes the video data in a linked manner so that the player can switch without being on an I-frame which can be costly from a resource perspective. In video encoding, the I-frame is the full frame of the image in a video and is coded without reference to the other frames. Traditionally, the encoding between segments would be different so that player would have to wait until the whole segment 1 (e.g. segment 40) plays out before switching to segment 2 (e.g. segment 42). Embodiments described herein provide similar encoding by encoders that enables switching between segments more granularly without having to wait until the whole segment 1 (e.g. segment 40) plays out before switching to another segment 2. Several encoders are jointly configured, with the same GOP structure, the same resolution and generate N streams in ascending order relative to the bitrate.

The rate selector can generate a reconstructed segment (e.g. segment 44) of fragments or chunks from multiple segments (e.g. segment 40, 42) by switching in fragments or chunks of each segment 40, 42 at the edge server or client side. The segments can be generated by encoders that are jointly configured so that they are similarly encoded.

For example, in some embodiments, the rate selector can generate the reconstructed segments by combining fragments from multiple segments. The example chunked CMAF reconstructed segment 44 is a combination of MDAT fragments from a first segment 40 and of MDAT fragments from a second chunked segment 42. In some embodiments, the reconstruction and recomposition of a valid MDAT sequence can be done at the edge server by selecting and combining MDAT fragments or chunks from different segments 40, 42 to allow bitrate switching at the fragment or chunk level. The new reconstructed segment 44 is a new sequence of chunks or fragments from the different segments 40, 42. The chunks or fragments can be at different bitrates.

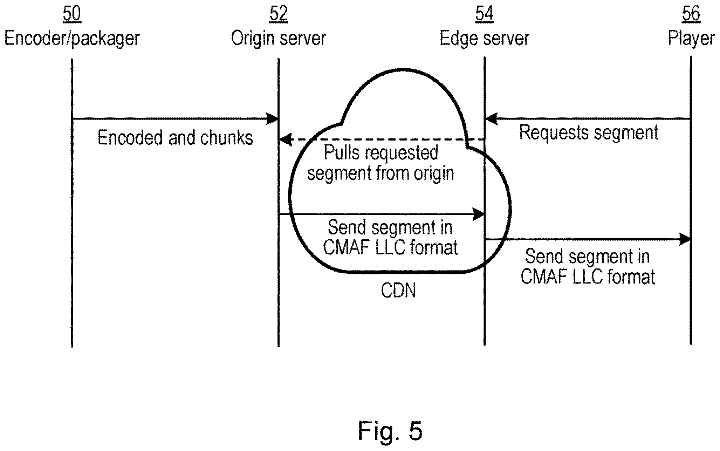

Fig. 5 is a view of an example schematic diagram of CMAF streaming. The CMAF streaming standard was not designed to allow bitrate switching at the fragment level. An encoder 50 provides encoded and chunked streams of a segment to an origin server 52. The origin server 52 sends a requested segment to the edge server 54 in response to a request from the player 56. In Fig. 5, the request from the player 56 to the edge server 54 is done at a granularity of per segment and not per fragment. Segments are composed of chunks or fragments. To achieve bitrate switching at the fragment level, the recomposition must be done at the edge server 54 side before being sent to the player 56. Selection of a segment entails switching from one stream to another.

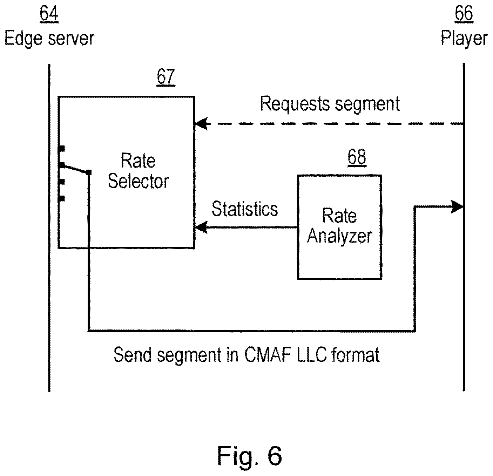

Fig. 6 shows a modified distribution process between an edge server 64 and a player 66.

In a first implementation of a process in Fig. 6, after an initial negotiation to initialize the bitrate (or starting with the smallest available), the CMAF-LLC (combined) segments corresponding to the maximal acceptable bitrate are pushed to the player 66. This maximal acceptable bitrate is obtained from statistics (e.g., maximal bandwidth, losses, and so on) computed by the rate observer or rate analyzer 68. Requests from the player 66 can be ignored or combined at the rate selector 67. The rate selector 67 also receives, for example, four of the same requested segment at different bitrates (possibly at the fragment level as well) in streams from the edge server 64 and the statistics of the player 66 from the rate analyzer 67 to select a segment to send to the player 66. This allows for more accurate and granular rate selection at the fragment level. That is, in some embodiments, the rate selector 67 receives multiple streams of the same requested segment at different bitrates from the edge server 64 and selects a segment to send to the player 66. That is, in some embodiments, the rate selector 67 receives multiple streams of fragments or chunks of the same requested segment at different bitrates from the edge server 64 and selects the chunks or fragments of the segment to send to the player 66.

For example, the last bottom (reconstructed) segment 44 in Fig. 4 might have advantages over the top first two segments 40, 42 because it has a wider variety of fragments and can have more granular bitrate switching between the fragments if they have different bitrates. The rate analyzer 68 can be implemented either at the edge server 64 or at the player 66.

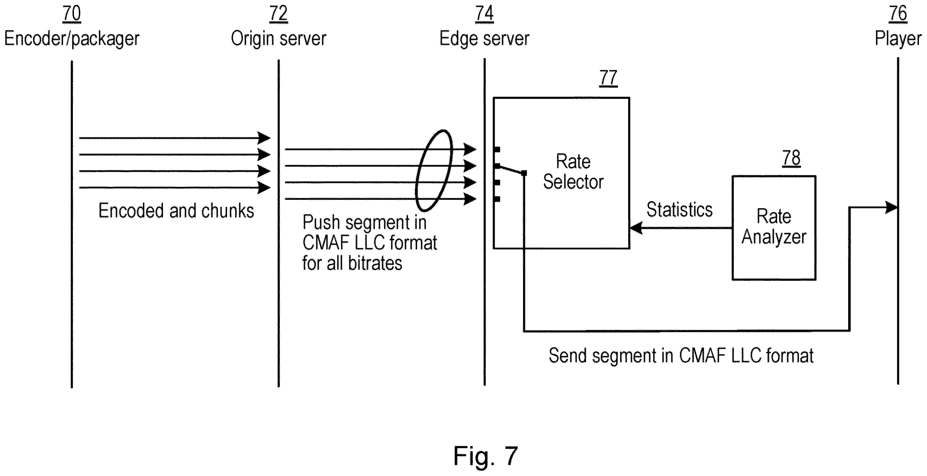

Fig. 7 is a schematic diagram of an example low delay distribution chain in push mode. An encoder 70 or packager encodes and chunks a segment at different bitrates, and sends to an origin server 72. The origin server 72 then pushes a segment at different bitrates in CMAF-LLC format to an edge server 74, where the each different bitrate is received as a different stream of the segment. In some embodiments, the encoder 70 or packager encodes and sends chunks or fragments at different bitrates to an origin server 72. The origin server 72 then pushes the chunks or fragments at different bitrates in CMAF-LLC format to the edge server 74, where each different bitrate is received as a different stream of the chunks of fragments.

A rate selector 77 then receives the streams of the same segment at different bitrates from the edge server 74 and receives statistics about a target player from a rate analyzer 78 to determine and select a best segment and bitrate to send to the player. The rate selector 77 can switch between different streams of the segment at the different bitrates. The selected segment/bitrate is then sent to the player 76 in CMAF-LLC format. The rate selection can be implemented at the edge server 74 in some embodiments. In these cases, all streams corresponding to all the possible bitrates must be conveyed to the edge server 74. The bitrate selection can also be implemented at the origin server 72 location, but it requires a very low network traversal time to be of interest.

In some embodiments, the rate selector 77 then receives the streams of the chunks or fragments at different bitrates from the edge server 74 and receives statistics about a target player from a rate analyzer 78 to determine and select bitrate of chunks/fragments to send to the player. The rate selector 77 can switch between different streams of fragments or chunks. The rate selector 77 can generate a reconstructed segment (in CMAF-LLC format) of the chunk/fragments of the selected bitrate(s). The segment can be sent to the player 76 in CMAF-LLC format.

Accordingly, Fig. 7 is an example illustration of a system for bitrate switching at different levels of granularity, such as the sub-GOP/picture level. There can be multiple encoders 70 jointly configured with the same GOP structure and the same resolution. The encoders 70 can generate N streams of the segment at different bitrates in ascending order relative to the bitrate. In some embodiments, an encoder 70 (of the jointly configured encoders) generates N streams of the segment at different bitrates in ascending order relative to the bitrate. In some embodiments, an encoder 70 (of the jointly configured encoders) generates N streams of the fragments or chunks at different bitrates in ascending order relative to the bitrate. In some embodiments, the encoder 70 can encode a segment in different bitrates. Segments are composed of chunks or fragments. In some embodiments, the encoder 70 can encode fragments or chunks in different bitrates. The encoder 70 can send the streams of different bitrates to the origin server 72. The encoder can send chunks or fragments of segments at different bitrates to the origin server 72. Each different bitrate can be sent/received as a different stream. The origin server 72 pushes chunks or fragments of a segment at different bitrates to the edge server 74.

In some embodiments, the rate selector 77 then receives the streams of the same segment at different bitrates from the edge server 74. The rate selector 77 can receive streams of chunks or fragments of the same segment at different bitrates from the edge server 74. The rate selector 77 receives a request for a segment from a player 76 and selects a bitrate for the segment. The rate analyzer 78 sends bitrate data about the player 76 to the rate selector 77 to select the bitrate for the segment. The rate selector 77 receives the segment from the edge server 74 and sends the segment in a selected bitrate to the player 76. The rate selector 77 can receive chunks or fragments of the segment from the edge server 74 and sends the chunks or fragments of the segment in a selected bitrate to the player 76.

In some embodiments, the rate selector 77 selects different fragments or chunks to reconstruct a segment, or generate a reconstructed segment from multiple segments. In some embodiments, the rate selector selects different fragments or chunks with different bitrates to reconstruct the segment.

In some embodiments, the plurality of encoders 70 stream the same segment to the edge server 74 at different bitrates through the origin server 72. In some embodiments, the plurality of encoders 70 stream the fragments of the segment to the edge server 74 at different bitrates. In some embodiments, the rate selector 77 switches between different segments and bitrates to select fragments to make up the requested segment for the player 76. In some embodiments, the rate selector 77 switches between fragments (of the segment) at different bitrates to make up the requested segment for the player 76. In some embodiments, the encoders/packagers 70 generate streams corresponding to bitrate ladders.

In some embodiments, the rate selector 77 sends the segment in CMAF-LLC format in the selected bitrate to the player 76. In some embodiments, the bitrate selection is implemented by the rate selector 77 at the edge server 74. In some embodiments, the edge server 74 receives the segment in CMAF-LLC format for all bitrates as multiple streams from the origin server 72. In some embodiments, for the CMAF-LLC format, each sub-GOP wrapped in a fragment is separated with a MOOF delimiter.

In some embodiments, bitrate selection is implemented by the rate selector 77 at the origin server 72 location. In some embodiments, all streams corresponding to all the possible bitrates for the segment are conveyed until the edge server 74. The rate selector 77 can switch between the streams based on the selected bitrate, for example.

In some embodiments, the rate analyzer 78 is implemented either at the edge server 74 side or at the player 76 side.

In some embodiments,, after initializing the bitrate, the segments corresponding to a maximal acceptable bitrate are pushed to the player 76, wherein the maximal acceptable bitrate is obtained from data computed by the rate observer or rate analyzer 78.

In some embodiments, the rate selector 77 is implemented at the edge server 74, wherein all streams (from the encoder 70) corresponding to all the possible bitrates are conveyed to the edge server 74.

The system can implement a method for bitrate switching at the sub-GOP/picture level. The system can implement different operations such as jointly configuring a plurality of encoders with the same GOP structure, the same resolution; generating, by the plurality of encoders, N streams in ascending order relative to the bitrate; receiving a request for a segment from a player; sending bitrate data about the player; selecting a bitrate for the segment using the bitrate data; and receiving the segment from an edge server and sending the segment in a selected bitrate to the player.

Switching pictures allows mastering of the distortion drift at the cost of additional rate cost. However, firstly, these image types have disappeared from modern compression standards, such as HEVC, WC, AVC, and so on, or they referred to an exotic standard profile (e.g., XP profile in H.264, scalable video coding (SVC)) that is not supported by most decoders. Secondly, mastering of the distortion drift comes at the cost of additional distortion, and the switch also comes at the cost of additional (unmastered) distortion, and incurs a bandwidth overhead. Embodiments described herein do not incur the bandwidth overhead that the standard profiles were subject to.

The reactivity of the bitrate adaptation now occurs on MOOF delimiters, meaning that bitrate adaptation can be configured at the sub-GOP or picture level. This selection is based on the picture frequency, not on the GOP anymore. An improved bitrate adaptation results in less player freezes because high frequent rate changes prevent network congestion between the edge server and the player. It helps with low delay transmission when all the bitrates are pushed to the edge server.

This may expand the scope of the CMAF-LLC standard (while maintaining compatibility).

Embodiments described herein provide for low delay video distribution. Encoders/packagers generate streams corresponding to bitrate ladders. All the streams corresponding to the selected channel can be pushed via SRT to the edge. The link between the edge and the player can be managed by WebRTC.

In some embodiments, an extension could be considered in the DASH manifest to signal the possibility to switch at the fragment level. It would correspond to the sub-GOP/picture in the video stream. It may require either a DASH standard amendment or a user-defined extension to DASH the manifest.

Embodiments described herein provide a model to distribute the encoding resources of several channels according to the content complexity.

If the proof of concept is validated the invention will allow to increase the density of MediaKind products, therefore there is a potential commercial interest. In addition, the invention could be extended to cloud environments but with specific adaptations to be defined.

In some embodiments, the system can be setup similar to the illustrative setup shown in Figure 3.

Measuring the variable encoding time and the video quality (PSNR, SSIM) of the output for content with various complexities (e.g. sport, news, etc.) can detect the encoding as described herein.

The embodiments of the devices, systems and methods described herein may be implemented in a combination of both hardware and software. These embodiments may be implemented on programmable computers, each computer including at least one processor, a data storage system (including volatile memory or non-volatile memory or other data storage elements or a combination thereof), and at least one communication interface.

Program code is applied to input data to perform the functions described herein and to generate output information. The output information is applied to one or more output devices. In some embodiments, the communication interface may be a network communication interface. In embodiments in which elements may be combined, the communication interface may be a software communication interface, such as those for inter-process communication. In still other embodiments, there may be a combination of communication interfaces implemented as hardware, software, and combination thereof.

Throughout the discussion, there may be references to servers, services, interfaces, portals, platforms, or other systems formed from computing devices. It should be appreciated that the use of such terms is deemed to represent one or more computing devices having at least one processor configured to execute software instructions stored on a computer readable tangible, non-transitory medium. For example, a server can include one or more computers operating as a web server, database server, or other type of computer server in a manner to fulfill described roles, responsibilities, or functions.

The following discussion provides many example embodiments. Although each embodiment represents a single combination of inventive elements, other examples may include all possible combinations of the disclosed elements. Thus if one embodiment comprises elements A, B, and C, and a second embodiment comprises elements B and D, other remaining combinations of A, B, C, or D, may also be used.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

Embodiments described herein may be implemented by one or more computing devices with at least one processor, a data storage device (including volatile memory or non-volatile memory or other data storage elements or a combination thereof), and at least one communication interface. The computing device components may be connected in various ways including directly coupled, indirectly coupled via a network, and distributed over a wide geographic area and connected via a network (which may be referred to as "cloud computing").

A network interface enables computing device to communicate with other components, to exchange data with other components, to access and connect to network resources, to serve applications, and perform other computing applications by connecting to a network (or multiple networks) capable of carrying data.

Although the embodiments have been described in detail, it should be understood that various changes, substitutions and alterations can be made herein without departing from the scope as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized. Accordingly, the appended claims are intended to include within their scope such processes, machines, manufacture, compositions of matter, means, methods, or steps

As can be understood, the examples described above and illustrated are intended to be exemplary only.

## Claims

1. A system for bitrate switching, the system comprising:
a plurality of encoders jointly configured with the same GOP structure and the same resolution, wherein the plurality of encoders generate N streams of different bitrates in ascending order relative to the bitrate;
a rate selector that receives a request for a segment from a player and selects a bitrate for the segment or a fragment of the segment; and
a rate analyzer that sends bitrate data about the player to the rate selector to select the bitrate for the segment or the fragment of the segment;
wherein the rate selector receives the segment or the fragment of the segment from an edge server and sends the segment in a selected bitrate to the player.

2. The system of claim 1 wherein the rate selector selects different fragments of the segment to reconstruct the segment.

3. The system of claim 1 wherein the plurality of encoders stream the same segment to the edge server at different bitrates.

4. The system of claim 1 wherein the rate selector switches between different bitrate streams to select fragments to make up the requested segment for the player.

5. The system of claim 1 wherein the encoders/packagers generate streams corresponding to bitrate ladders.

6. The system of claim 1 wherein the rate selector sends the segment in CMAF-LLC format in the selected bitrate to the player.

7. The system of claim 1 wherein the rate analyzer is implemented either at the edge side or at the player side.

8. The system of claim 1 wherein bitrate selection is implemented by the rate selector at the edge server.

9. The system of claim 1 wherein the edge server receives the segment in CMAF-LLC format for all bitrates.

10. The system of claim 1 wherein bitrate selection is implemented by the rate selector at the origin server location.

11. The system of claim 1 wherein all streams corresponding to all the possible bitrates are conveyed until the edge server.

12. The system of claim 1 wherein for the CMAF-LLC format, each sub-GOP wrapped in a fragment is separated with a MOOF delimiter.

13. The system of claim 1 wherein, after initializing the bitrate, the segments corresponding to a maximal acceptable bitrate are pushed to the player, wherein the maximal acceptable bitrate is obtained from data computed by the rate observer.

14. The system of claim 1 wherein the rate selector is implemented at the edge server, wherein all streams corresponding to all the possible bitrates are conveyed to the edge server.

15. The system of claim 1 wherein the encoders generate N streams of the segment at different bitrates.

16. The system of claim 1 wherein the encoders generate N streams of chunks or fragments of the segment at different bitrates.

17. A method for bitrate switching, the method comprising:
jointly configuring a plurality of encoders with the same GOP structure, the same resolution;
generating, by the plurality of encoders, N streams in ascending order relative to the bitrate;
receiving a request for a segment from a player;
sending bitrate data about the player;
selecting a bitrate for the segment or a fragment of the segment using the bitrate data; and
receiving the segment or the fragment of the segment from an edge server;
sending the segment in a selected bitrate to the player.
